**Europäisches Patentamt**

**European Patent Office**

**Office européen des brevets**

(19)

(11) Veröffentlichungsnummer : **0 348 613 B1**

(12) **EUROPÄISCHE PATENTSCHRIFT**

(45) Veröffentlichungstag der Patentschrift :
17.07.91 Patentblatt 91/29

(51) Int. Cl.⁵ : **B60B 23/12**

(21) Anmeldenummer : 89106697.9

(22) Anmeldetag : 14.04.89

(54) Haltebock für Spurverstellräder.

(30) Priorität : 25.06.88 DE 3821533

(43) Veröffentlichungstag der Anmeldung :
03.01.90 Patentblatt 90/01

(45) Bekanntmachung des Hinweises auf die
Patenterteilung :
17.07.91 Patentblatt 91/29

(84) Benannte Vertragsstaaten :
AT DE ES FR GB IT

(56) Entgegenhaltungen :
DE-A- 2 609 031
DE-C- 928 868
US-A- 2 486 970

(73) Patentinhaber : LEMMERZ-WERKE KGaA
Ladestrasse
W-5330 Königswinter 1 (DE)

(72) Erfinder : Fuchs, Willi, Dr. Ing.
Bodelschwinghstrasse 30
W-5202 Hennef 1 (DE)
Erfinder : Kermelk, Werner, Dipl.-Ing.
Derscheid 37
W-5203 Much (DE)

(74) Vertreter : Vollbach, Hans, Dipl.-Ing. et al
Patentanwälte Dipl.-Ing. Buschhoff Dipl.Ing
Hennicke Dipl.-Ing. Vollbach
Kaiser-Wilhelm-Ring 24
W-5000 Köln 1 (DE)

## Beschreibung

Die Erfindung betrifft einen Haltebock für Spurverstellräder, bestehend aus einem etwa U-förmigen Formteil, das im Bereich der freien Enden seiner beiden an einem Profilsteg angeordneten Profilschenkel mit der Spurverstellfelge, vorzugsweise durch eine Schweißverbindung, verbindbar ist. Ein derartiger Heltebock ist z.B. durch die DE-A-2 609 031 bekannt.

Spurverstellräder werden bekanntlich zur Spurweiteneinstellung vor allem bei Ackerschleppern und sonstigen Fahrzeugen für den land- und forstwirtschaftlichen Einsatz verwendet. Die gebräuchlichen Spurverstellräder weisen Radschüsseln auf, die mittels Schraubenbolzen in unterschiedlichen Axialpositionen an der Spurverstellfelge anschließbar sind. Die Felgen sind dabei mit mehreren über ihren Innenumfang angeordneten angeschweißten Halteböcken versehen, an denen die mehrlappige Radschüssel angeschlossen wird.

In der Vergangenheit sind zahlreiche Gestaltungsformen für die der Schraubenbefestigung der Spurverstellfelge dienenden Halteböckchen vorgeschlagen und verwendet worden, u.a. winkel- oder S-förmige Halteböcke, sogenannte Omega-Böckchen oder auch etwa U-förmige Halteböcke. Die bekannten Halteböcke werden durch Nietung, Punktschweißen, im allgemeinen aber mittels axialer Schweißnähte oder mittels in Felgenumfangsrichtung verlaufender Schweißnähte, gelegentlich aber auch mittels einer Kombination beider Schweißnähte mit der Spurverstellfelge verbunden (DE-C-837 649, GB-A-666 112, DE-C-22 47 007, DE-U-76 05 257, EP-A-0 025 677, DE-Patentanmeldung P 37 41 640, DE-U-18 35 325, DE-U-18 43 932).

Die Erfindung geht aus von den in der Grundform zumindest angenähert U-förmigen Halteböcken, die mit ihrer Profilöffnung gegen die Spurverstellfelge gerichtet mit dieser verbunden werden, vorzugsweise mittels in Umfangsrichtung der Felge verlaufender Schweißnähte. Aufgabe der Erfindung ist es vornehmlich, diese Halteböcke bei großer Bauteilfestigkeit so auszugestalten, daß sich auch bei sehr hohen Betriebsbeanspruchungen keine schädlichen Spannungskonzentrationen in den besonders gefährdeten Endbereichen des Haltebocks, und hier vor allem im Bereich der Krümmungsradien der Profilschenkel am Übergang zum Profilsteg, einstellen können, die unter schweren Einsatzbedingungen zu Verformungen und ggf. sogar zu einem Bruch der Halteböcke führen können.

Die vorgenannte Aufgabe wird erfindungsgemäß dadurch gelöst, daß der Profilsteg in den beiden Endbereichen des Haltebocks eine zur Profil-Außenseite gerichtete Auswölbung mit einem ersten inneren Krümmungsradius zwischen dem Profilsteg und den Profilschenkeln aufweist, der größer ist als ein zweiter innerer Krümmungsradius zwischen dem Profilsteg und den senkrecht zur Achse des Spurverstellrads verlaufenden Profilschenkeln im Zwischenabschnitt des Haltebocks zwischen dessen beiden Endbereichen. Vorzugsweise sind die Endbereiche des etwa U-förmig ausgebildeten Haltebocks so ausgeformt, daß hier die beiden Profilschenkel im Übergangsbereich zu dem nach außen gewölbten Profilsteg gegenüber ihrer Lage im Zwischenabschnitt des Haltebocks nach innen in den Profilinnenraum eingezogen sind.

Mit der erfindungsgemäßen Formgestaltung des U-förmigen Haltebocks gelingt es, schädliche Spannungskonzentrationen in den besonders gefährdeten Endbereichen des Haltebocks zu vermeiden und ohne übermäßigen Fertigungsaufwand einen Haltebock hoher Bruchfestigkeit zu schaffen. Die Vergrößerung der Krümmungsradien an den Übergängen zwischen den Profilschenkeln und dem Profilsteg des U-Profils in den Endbereichen des Haltebocks führt zu festigkeitsmäßig günstigen Anlageverhältnissen zwischen diesem und dem Radschüssellappen. Insbesondere läßt sich hiermit erreichen, daß in den Endbereichen des Haltebocks keine Anlage mit dem Radschüssellappen gegeben ist, diese sich vielmehr auf den inneren Längenabschnitt des Haltebocks beschränkt, wo eine großflächige Anlage des Radschüssellappens am Profilschenkel des Haltebocks gegeben ist.

Die Ausformung der Endbereiche des erfindungsgemäßen Haltebocks erfolgt zweckmäßig derart, daß der Krümmungsradius zwischen dem Profilsteg und den Senkrecht zur Achse des Spurverstellrads verlaufenden Profilschenkeln vom Übergang zu dem vorgenannten Zwischenabschnitt des Haltebocks in Richtung auf das betreffende Ende desselben stetig ansteigt. Dabei läßt sich die Anordnung so treffen, daß der innere Krümmungsradius an den Enden des Haltebocks um mindestens etwa das Vier- bis Sechsfache größer ist als auf dem genannten Zwischenabschnitt. An den Enden des Haltebocks kann der Krümmungsradius zumindest in grober Annäherung etwa gleich der halben Profil-Innenbreite des U-Profils sein. Das bedeutet, daß der Mittelpunkt des Krümmungsradius (oder der beiden Krümmungsradien) des Profilstegs und der Übergangsbereiche zu den beiden Profilschenkeln etwa in der Mittelachse des U-Profils oder zu dieser nur geringfügig seitlich versetzt liegt. Die Länge der ausgewölbten Endbereiche beträgt im allgemeinen etwa 10-20% der Gesamtlänge des Haltebocks, gemessen über seinen Profilsteg.

Auf dem genannten Zwischenabschnitt ist der Profilsteg zweckmäßig als Flachsteg ausgebildet. Die etwa senkrecht zu dem Flachsteg stehenden Profilschenkel gehen dabei mit kleinen inneren Krümmungsradien, die in der Größenordnung von etwa 4-7 mm liegen mögen, in den Profilsteg über. Es sollten auf dem genannten Zwischenabschnitt die beiden Profilschenkel geringfügig geneigt angeordnet werden, so daß ihr Winkel, den

2

sie mit dem Profilsteg einschließen, um etwa 0,1°-0,5° größer ist als 90°. Hierdurch ergeben sich unter den Axialkräften günstigere Belastungsverhältnisse an den auf Biegung beanspruchten Profilradien.

Die lösbare Verbindung der Spurverstellfelge mit der Radschüssel erfolgt zweckmäßig mittels Schraubenbolzen. Dabei werden die Löcher für die Schraubenbolzen zweckmäßig außerhalb der ausgeformten Endbereiche an den Profilschenkeln angeordnet. Die Verbindung mit der Radschüssel kann an jedem Haltebock mittels eines einzigen Schraubenbolzens oder aber auch mittels zweier oder mehr Schraubenbolzen erfolgen. Vorteilhaft ist insbesondere eine Ausgestaltung des erfindungsgemäßen Haltebocks als Doppel-Haltebock, der sich mit Hilfe zweier Schraubenbolzen an dem zugeordneten Radschüssellappen anschließen läßt. Die Bolzenlöcher an den beiden Profilschenkeln lassen sich so anordnen, daß ihre Lochachsen etwa in Höhe der Krümmungsmittelpunkte der endseitigen Ausformungen des Haltebocks liegen.

Die beiden Profilschenkel des erfindungsgemäßen Haltebocks werden zweckmäßig mit nach außen gerichteten Flanschen versehen, an denen sie mittels in Umfangsrichtung verlaufender Schweißnähte mit der Spurverstellfelge verbunden werden können. Im übrigen wird der erfindungsgemäße Haltebock vorzugsweise als einstückiges Blechpreßteil hergestellt.

Die Erfindung schließt auch eine Spurverstellfelge ein, die zur Befestigung an der Radschüssel mit den erfindungsgemäßen Halteböcken ausgestattet ist. Erfindungsgemäß ist dabei die Anordnung so getroffen, daß sich die Halteböcke mit ihren Profilschenkeln in Axialrichtung der Felge gegen eine Ausformung des Felgenbodens seitlich abstützen, wobei diese Ausformung vorteilhafterweise von dem Tiefbett einer Doppelfelge (DW-Felge) gebildet wird, wie dies in der nicht-vorveröffentlichten DE-Patentanmeldung P 37 41 640 offenbart ist.

Die Erfindung wird nachfolgend im Zusammenhang mit den in der Zeichnung gezeigten Ausführungsbeispielen näher erläutert. In der Zeichnung zeigen :

Fig. 1 ein mit erfindungsgemäßen Halteböcken versehenes Spurverstellrad nach der Erfindung in einem radialen Teilschnitt durch Felge, Haltebock und Radschüssel ;

Fig. 2 das Spurverstellrad nach Fig. 1 in einer Ansicht ;

Fig. 3 einen einzigen Haltebock nach der Erfindung in größerem Maßstab in Seitenansicht ;

Fig. 4 den Haltebock nach Fig. 3 in einem Schnitt nach Linie IV-IV der Fig. 3 (links der vertikalen Mittelebene) und in einer Stirnansicht (rechts der vertikalen Mittelebene) ;

Fig. 5 in der Schnittdarstellung der Fig. 1 eine geänderte Ausführungsform des Haltebocks und seiner Befestigung an der Spurverstellfelge.

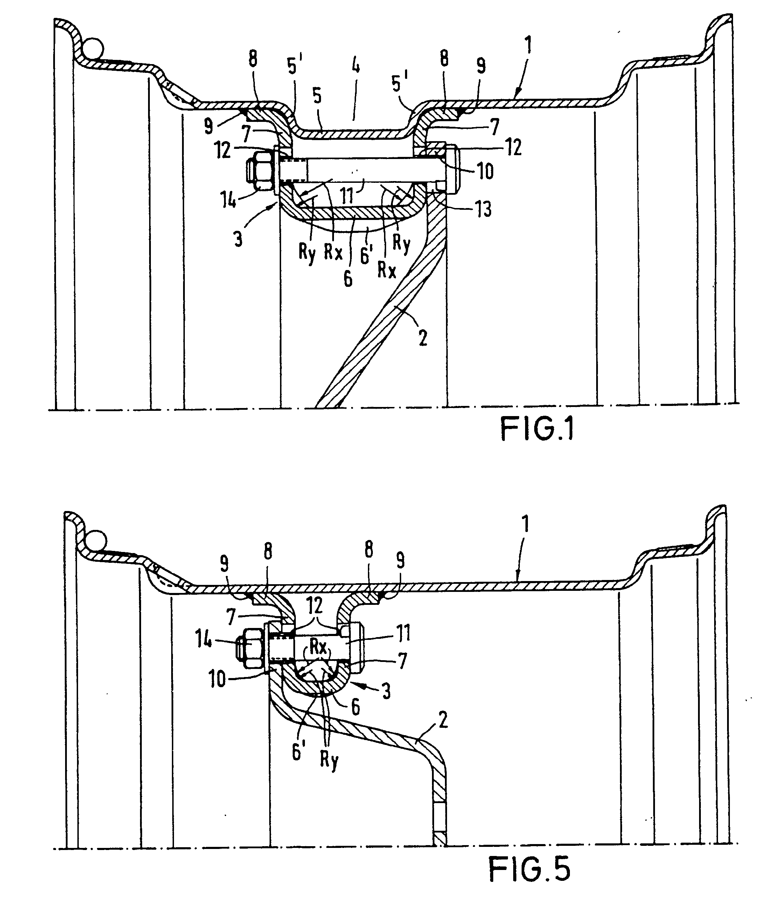

Das als Scheibenrad ausgebildete Spurverstellrad nach den Fig. 1 bis 4 besteht in seinen Hauptteilen aus der Spurverstellfelge 1 als Träger für die (nicht dargestellte) Luftbereifung, der Radschüssel 2 als Verbindungsteil zwischen Felge und Radnabe und Halteböcken 3, die der lösbaren und verstellbaren Verbindung der Radschüssel 2 mit der Spurverstellfelge 1 dienen.

Wie vor allem Fig. 1 zeigt, ist die einteilige Felge 1 als Doppeltiefbettfelge (DW-Felge) ausgebildet, deren Tiefbett 4 von dem Boden 5 und den beiden Flanken 5′ begrenzt ist. Die beiden Flanken 5′ bilden bei dem Ausführungsbeispiel nach den Fig. 1 bis 4 seitliche Anlage- und Abstützflächen für die Halteböcke 3.

Die Halteböcke 3 bestehen aus zumindest angenähert U-förmigen Formteilen, die vorzugsweise als einstückige Blechpreßteile gefertigt werden. Die mit dem Profilsteg 6 einstückig verbundenen Senkrecht zur Achse des Spurverstellrads verlaufenden Profilschenkel 7 der U-förmigen Halteböcke 3 weisen an ihren freien Schenkelenden nach außen gerichtete Flansche 8 auf, an denen die Halteböcke mit Hilfe von in Umfangsrichtung der Felge 1 verlaufenden Schweißnähten 9 innenseitig an der Felge befestigt werden.

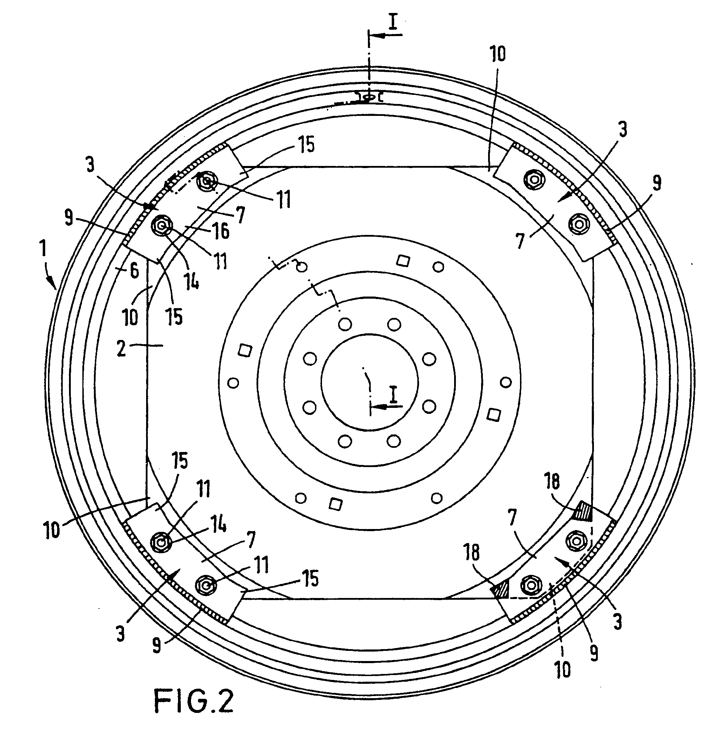

Wie Fig. 2 zeigt, sind über den Innenumfang der Spurverstellfelge 1 verteilt vier Halteböcke 3 angeordnet, die als Doppel-Halteböcke ausgeführt sind. Die Radschüssel 2 ist demgemäß als vierlappige Schüssel ausgebildet, die an jedem ihrer Schüssellappen 10 mit Hilfe zweier axialer Schraubenbolzen 11 am Haltebock 3 befestigt ist.

Wie Fig. 1 zeigt, ist bei diesem bevorzugten Ausführungsbeispiel die Anordnung so getroffen, daß sich die Halteböcke 3 mit ihren beiden Profilschenkeln 7 an den Flanken 5′ des Tiefbettes 4 abstützen. Auf diese Weise wird eine Formschlußverbindung der Halteböcke 3 an der Felge 1 in Achsrichtung des Spurverstellrades erhalten.

Die beiden Profilschenkel 7 der Halteböcke 3 sind mit Bolzenlöchern 12 für die Schraubenbolzen 11 versehen. Entsprechend weist die Radschüssel 2 an ihren vier Schüssellappen 10 jeweils zwei Bolzenlöcher 13 für den Durchgriff der Schraubenbolzen 11 auf. Mit 14 sind die auf die Gewindeenden der Schraubenbolzen 11 aufgedrehten Muttern bezeichnet, mit deren Hilfe die festen Schraubverbindungen zwischen der Spurverstellfelge und der Radschüssel bewirkt werden.

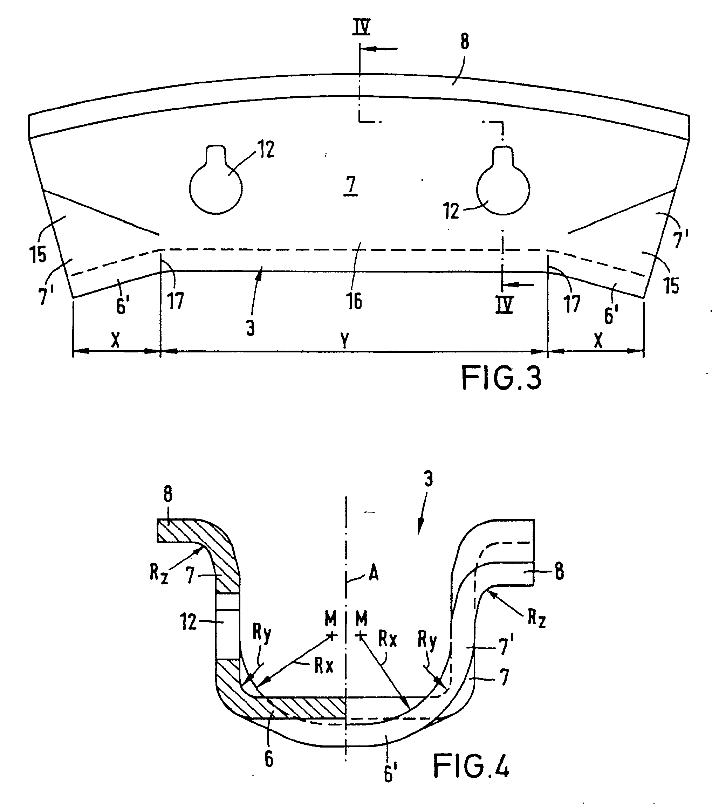

Von Bedeutung ist vor allem die Ausgestaltung der Halteböcke 3. In den Fig. 3 und 4 ist ein einzelner Haltebock 3 gezeigt, der, wie oben erwähnt, aus einem Blechpreßteil besteht. Der Haltebock 3 umfaßt in einem Stück die beiden Endbereiche 15, die sich, über den Profilsteg gemessen, über eine Länge X erstrecken, und den Zwischenabschnitt 16 mit der Länge Y. Auf dem Zwischenabschnitt 16 ist der Profilsteg 6 des U-Profils, wie in Fig. 4 links gezeigt, als Flachsteg ausgebildet. Die beiden Profilschenkel 7 stehen hier im wesentlichen rechtwinklig zum Profilsteg 6 ; sie gehen mit dem inneren Krümmungsradius Ry in den Flachsteg über. Der Krümmungsradius Ry ist verhältnismäßig klein ; er liegt im allgemeinen bei etwa 4-7 mm. Die Außenflächen der Profilstege 7 bilden ebene Anlageflächen für die Radschüssellappen 10.

In den beiden Endbereichen 15 des Haltebocks wird das U-Profil von dem Profilsteg 6' und den Profilschenkeln 7' gebildet. Wie vor allem Fig. 4 zeigt, ist der Profilsteg 6' des U-Profils in den beiden Endbereichen 15 des Haltebocks zur Profil-Außenseite hin ausgewölbt. Zugleich sind die beiden Profilschenkel 7' im gekrümmten Übergangsbereich zu dem ausgewölbten Profilsteg 6' gegenüber der Lage der Profilschenkel 7 im Zwischenabschnitt 16 in den Profilinnenraum eingezogen. Dies bedeutet, daß in den Endbereichen 15 die Profilschenkel 7' mit ersten inneren Krümmungsradien Rx in den Profilsteg 6' übergehen, die erheblich größer sind als die zweite innere Krümmungsradien Ry im Zwischenabschnitt 16 des Haltebocks. Dabei ist die Anordnung so getroffen, daß der erster innerer Krümmungsradius Rx vom Übergang 17 (Fig. 3) zu dem Zwischenabschnitt 16 in Richtung auf das benachbarte Ende des Haltebocks stetig ansteigt, wodurch sich die in Fig. 3 gezeigte Abknickung des Profilstegs in den Endbereichen 15 des Haltebocks ergibt. Der erste innere Krümmungsradius Rx ist zweckmäßig erheblich größer, vorzugsweise um mindestens etwa das Vier- bis Sechsfache größer als der zeite innere Krümmungsradius Ry im Bereich des Zwischenabschnittes 16. Der erste innere Krümmungsradius $R_x$ kann an den Enden des Haltebocks zumindest angenähert gleich der halben Profil-Innenbreite sein. Der Krümmungsmittelpunkt M liegt hierbei in oder in Nähe der vertikalen Mittelachse A des U-Profils. Die Länge X der in obiger Weise ausgeformten Endbereiche 15 des Haltebocks 3 beträgt zweckmäßig etwa 10-20% der Gesamtlänge des Haltebocks 3, gemessen über seinen Profilsteg 6, 6'.

Wie Fig. 3 zeigt, befinden sich die Löcher 12 für die Schraubenbolzen 11 außerhalb der ausgeformten Endbereiche 15, also im Bereich des Zwischenabschnittes 16 an den Profilschenkeln 7, und zwar jeweils in Nähe der Übergangsstellen 17 zu den Endbereichen 15. Die Lochachsen liegen, wie Fig. 4 zeigt, etwa in Höhe des Mittelpunktes M der Krümmungsradien Rx.

Mit der vorstehend beschriebenen Ausgestaltung des Haltebocks wird erreicht, daß sich insbesondere in den kritischen Endbereichen derselben, und zwar vor allem im Bereich der Krümmungsradien Rx bzw. Ry, keine schädlichen Spannungskonzentrationen einstellen können. Die Vergrößerung der zweite innere Krümmungsradius Ry an den Übergängen zwischen den Profilschenkeln 7' und dem Profilsteg 6' führt zu festigkeitsmäßig günstigen Anlageverhältnissen zwischen den Radschüssellappen 10 und den Profilschenkeln der Halteböcke 3. Insbesondere läßt sich hiermit erreichen, daß in den kritischen Endbereichen der Halteböcke keine Anlage zu den Radschüssellappen 10 besteht. In Fig. 2 sind an einem der Halteböcke 3 die Flächenfelder bei 18 schraffiert angedeutet, in denen in den beiden Endbereichen 15 der Halteböcke 3 keine Schüsselanlage zu den Profilschenkeln 7' vorhanden ist. Die Radschüssellappen 10 stützen sich vielmehr an den geradlinigen Profilschenkeln 7 im Zwischenabschnitt 16 großflächig ab, wo sich auch die Befestigungsschrauben 11 befinden.

Es empfiehlt sich, auf dem Zwischenabschnitt 16 die Profilschenkel 7 geringfügig geneigt anzuordnen, so daß ihr Innenwinkel, den sie mit dem als Flachsteg ausgebildeten Profilsteg 6 einschließen, um höchstens etwa. 0,1°-0,5° größer ist als 90°. Auch diese Maßnahme trägt dazu bei, an den Radschüsselbefestigungsstellen günstige Belastungsverhältnisse für die Böckchenradien $R_x$ und $R_y$ sowie die Flanschradien $R_z$ (Fig. 4) zu erreichen.

Bei der Ausführungsform nach Fig. 5 sind die Halteböcke 3 an ihren nach außen weisenden Flanschen 8 über die Schweißnähte 9 am zylindrischen Innenumfang des Felgenbodens befestigt, ohne daß hier eine Seitenabstützung der Profilschenkel 7 an Flanken 6 (Fig. 1) eines Tiefbetts 4 gegeben ist. Die Halteböcke 3 entsprechen im übrigen grundsätzlich denjenigen nach den Fig. 3 und 4. Es versteht sich, daß die Verbindung der Radschüssel mit der Spurverstellfelge an jedem Haltebock auch nur mittels einer einzigen Schraube 11 oder aber auch mit Hilfe von mehr als zwei Schrauben 11 erfolgen kann. Die Länge des Haltebocks 3 ist selbstverständlich abhängig von der Anzahl der Schraubenbolzen 11. Die Anordnung wird zweckmäßig so getroffen, daß sich die Schraubenbolzen 11 in möglichst kleinem radialen Abstand zum Felgenboden befinden. Die als U-Böckchen aus Blech gefertigten Halteböcke 3 können bei Bedarf auch mit Verstärkungen oder Aussteifungen od.dgl. versehen werden. Beispielsweise können die beiden Schenkel 7 der Halteböcke 3 durch parallel zu dem Steg 6 eingesetzte bzw. eingeschweißte Verstärkungsstege oder auch Rohrabschnitte od.dgl., durch welche die Schrauben 11 hindurchgesteckt werden können, gegeneinander abgestützt und ausgesteift werden. Im allgemeinen sind jedoch die erfindungsgemäßen Halteböcke derart formstabil, daß auf solche Verstärkungen verzichtet werden kann.

**Patentansprüche**

1. Halbebock (3) für Spurverstellräder, bestehend aus einem etwa U-förmigen Formteil, das im Bereich (15) der freien Enden seiner beiden an einem Profilsteg (6, 6') angeordneten Profilschenkel (7, 7') mit der Spurverstellfelge (1), vorzugsweise durch eine Schweißverbindung (9), verbindbar ist, **dadurch gekennzeichnet,** daß der Profilsteg (6') in den beiden Endbereichen (15) des Haltebocks (3) eine zur Profil-Außenseite gerichtete Auswölbung mit einem ersten inneren Krümmungsradius (Rx) aufweist, der größer ist als ein zweiter innerer Krümmungsradius (Ry) zwischen dem Profilsteg (6) und den etwa senkrecht zur Achse des Spurverstellrads verlaufenden Profilschenkeln (7) im Zwischenabschnitt (16) zwischen den beiden Endbereichen (15) des Haltebocks (3).

2. Haltebock nach Anspruch 1, **dadurch gekennzeichnet,** daß in den Endbereichen (15) die beiden Profilschenkel (7') im gekrümmten Übergangsbereich zu dem gewölbten Profilsteg (6') gegenüber der Lage der Profilschenkel (7) im Zwischenabschnitt (16) in den Profilinnenraum eingezogen sind.

3. Haltebock nach Anspruch 1 oder 2, **dadurch gekennzeichnet,** daß der erste innere Krümmungsradius (Rx) zwischen dem Profilsteg (6') und den Profilschenkeln (7') vom Übergang (17) zu dem Zwischenabschnitt (16) in Richtung auf das Ende des Haltebocks (3) hin stetig ansteigt.

4. Haltebock nach einem der Ansprüche 1 bis 3, **dadurch gekennzeichnet,** daß der erste innere Krümmungsradius (Rx) an den Enden des Haltebocks (3) um mindestens etwa das Vier- bis Sechsfache größer ist als der zweite Krümmungsradius (Ry) auf dem genannten Zwischenabschnitt (16).

5. Haltebock nach einem der Ansprüche 1 bis 4, **dadurch gekennzeichnet,** daß der erste Krümmungsradius ($R_x$) an den Enden des Haltebocks zumindest angenähert etwa gleich der halben Profil-Innenbreite ist, wobei der Krümmungsmittelpunkt (M) auf oder in Nähe der Mittelachse (A) des U-Profils liegt.

6. Haltebock nach einem der Ansprüche 1 bis 5, **dadurch gekennzeichnet,** daß die Länge (X) der ausgeformten Endbereiche (15) etwa 10-20% der Gesamtlänge des Haltebocks (3), gemessen über seinen Profilsteg (6, 6'), ist.

7. Haltebock nach einem der Ansprüche 1 bis 6, **dadurch gekennzeichnet,** daß der Profilsteg (6) auf dem Zwischenabschnitt (16) als Flachsteg ausgebildet ist.

8. Haltebock nach einem der Ansprüche 1 bis 7, **dadurch gekennzeichnet,** daß die Löcher (12) für die der Verbindung mit der Radschüssel (2) dienenden Schraubenbolzen (11) außerhalb der ausgeformten Endbereiche (15) an den Profilschenkeln (7) angeordnet sind.

9. Haltebock nach Anspruch 8, **dadurch gekennzeichnet,** daß er im Zwischenabschnitt (16) an den Profilschenkeln (7) zwei Lochpaare (12) für zwei Schraubenbolzen (11) aufweist.

10. Haltebock nach Anspruch 8 oder 9, **dadurch gekennzeichnet,** daß die Lochachsen der Bolzenlöcher (12) etwa in Höhe des Krümmungsmittelpunktes (M) der ausgeformten Endbereiche (15) liegen.

11. Haltebock nach einem der Ansprüche 1 bis 10, **dadurch gekennzeichnet,** daß die beiden Profilschenkel (7) in dem Zwischenabschnitt (16) unter einem Winkel, der um 0,1°-0,5° vom rechten Winkel abweicht, zu dem Profilsteg (6) geneigt sind, derart, daß sie in Richtung auf den Profilsteg (6) gegeneinander konvergieren.

12. Haltebock nach einem der Ansprüche 1 bis 11, **dadurch gekennzeichnet,** daß die Profilschenkel (7, 7') mit nach außen gerichteten Flanschen (8) versehen sind.

13. Haltebock nach einem der Ansprüche 1 bis 12, **dadurch gekennzeichnet,** daß er aus einem einstückigen Blechpreßteil besteht.

14. Spurverstellfelge mit an ihrem Felgenboden, vorzugsweise durch Umfangsschweißnähte, befestigten Halteböcken nach einem oder mehreren der Ansprüche 1 bis 13, **dadurch gekennzeichnet,** daß sich die Halteböcke (3) mit ihren Profilschenkeln (7, 7') in Richtung der Radachse gegen eine Ausformung (4) des Felgenbodens, vorzugsweise gegen die Flanken (6) eines Tiefbettes (4), abstützen.

**Claims**

1. Holding bracket (3) for adjustable wheels, comprising an approximately U-shaped profile which can be connected to the adjustable rim (1), preferably by a weld connection (9), in the region (15) of the free ends of its two profile limbs (7, 7') arranged on a profile web (6, 6'), characterised in that the profile web (6') has in the two end regions (15) of the holding bracket (3) a curvature directed towards the outside of the profile having a first inner radius of curvature (Rx) which is greater than a second inner radius of curvature (Ry) between the profile web (6) and the profile limbs (7), extending approximately perpendicular to the axle of the adjustable wheel, in the intermediate section (16) between the two end regions (15) of the holding bracket (3).

2. Holding bracket according to Claim 1, characterised in that, in the end regions (15), the two profile limbs (7') are drawn inwards into the inside space of the profile in the curved transition region to the curved profile

5

web (6') in relation to the position of the profile limbs (7) in the intermediate section (16).

3. Holding bracket according to Claim 1 or 2, characterised in that the first inner radius of curvature (Rx) increases constantly between the profile web (6') and the profile limbs (7') from the transition (17) to the intermediate section (16) towards the end of the holding bracket (3).

4. Holding bracket according to one of Claims 1 to 3, characterised in that the first inner radius of curvature (Rx) is at least approximately four to six times greater at the ends of the holding bracket (3) than the second radius of curvature (Ry) on the said intermediate section (16).

5. Holding bracket according to one of Claims 1 to 4, characterised in that the first radius of curvature (Rx) is at least approximately equal to half the inside width of the profile at the ends of the holding bracket, the mid-point of curvature (M) lying on or near to the mid-axis (A) of the U-profile.

6. Holding bracket according to one of Claims 1 to 5, characterised in that the length (X) of the shaped end regions (15) is approximately 10-20% of the overall length of the holding bracket (3), measured over its profile web (6, 6').

7. Holding bRacket according to one of Claims 1 to 6, characterised in that the profile web (6) on the intermediate section (16) is constructed as a flat web..

8. Holding bracket according to one of Claims 1 to 7, characterised in that the holes (12) for the threaded bolts (11) serving for the connection to the wheel naves (2) are arranged on the profile limbs (7) outside the shaped end regions (15).

9. Holding bracket according to Claim 8, characterised in that it has two pairsof holes (12) for two threaded bolts (11) in the intermediate section (16) on the profile limbs (7).

10. Holding bracket according to Claim 8 or 9, characterised in that the axes of the bolt holes (12) lie approximately on the level of the mid-point of curvature (M) of the shaped end regions (15).

11. Holding bracket according to one of Claims 1 to 10, characterised in that the two profile limbs (7) are inclined in the intermediate section (16) at an angle, which deviates by 0.1°-0.5° from the right angle, to the profile web (6) in such a way that they converge towards each other in the direction of the profile web (6).

12. Holding bracket according to one of Claims 1 to 11, characterised in that the profile limbd (7, 7') are provided with outwardly directed flanges (8).

13. Holding bracket according to one of Claims 1 to 12, characterised in that it is composed of an integral sheet metal stamping.

14. Adjustable rim having holding brackets attached to its rim base, preferably by circumferential weld seams, according to one or more of Claims 1 to 13, characterised in that the holding brackets (3) with their profile limbs (7, 7') in the direction of the wheel axle are supported against a recess (4) in the rim base, preferably against the flanks (6) of a well (4).

## Revendications

1. Support de montage (3) pour des roues à réglage de voie, constitué par une pièce profilée sensiblement en forme de U, qui peut être relié, de préférence par une soudure (9), à la jante de réglage de voie (1) dans la zone (15) des extrémités libres des deux ailes (7, 7') du profilé se raccordant au dos (6, 6') du profilé en s'étendant perpendiculairement à l'axe de la roue de réglage, caractérisé en ce que le dos du profilé (6') comporte dans les deux zones terminales (15) du support de montage (3) une partie bombée orientée vers le côté extérieur du profilé ayant un premier rayon de courbure intérieure (Rx) qui est plus grand qu'un second rayon de courbure intérieur (Ry) entre le dos du profilé (6) et les ailes du profilé (7) s'étendant perpendiculairement à l'axe de la roue de réglage de voie, dans la portion intermédiaire (16) entre les deux zones terminales (15) du support de montage (3).

2. Support de montage selon la revendication 1, caractérisé en ce que dans les zones terminales (15), les deux ailes du profilé (7') sont rentrées dans le volume intérieur du profilé dans la zone de transition incurvée avec le dos du profilé (6') bombé, par rapport à la position des ailes du profilé (7) dans la portion intermédiaire (16).

3. Support de montage selon la revendication 1 ou 2, caractérisé en ce que le premier rayon de courbure intérieur (Rx) entre le dos du profilé (6') et les ailes du profilés (7') augmente progressivement de la transition (17) avec la portion intermédiaire (16), en direction de l'extrémité du support de montage (3).

4. Support de montage selon l'une des revendications 1 à 3, caractérisé en ce que, aux extrémités du support de montage (3), le premier rayon de courbure intérieur (Rx) est au moins environ quatre à six fois plus grand que le second rayon de courbure (Ry) sur la portion intermédiaire (16) précitée.

5. Support de montage selon l'une des revendications 1 à 4, caractérisé en ce que le premier rayon de courbure (Rx) aux extrémités du support de montage est au moins sensiblement égal à la moitié de la largeur intérieure du profilé, le centre de courbure (M) se trouvant sur l'axe médian (A) du profilé en U ou au voisinage de celui-ci.

6. Support de montage selon l'une des revendications 1 à 5, caractérisé en ce que la longueur (X) des zones terminales déformées (15) correspond sensiblement à 10 à 20% de la longueur totale du support de montage, mesurée sur le dos de profilé (6, 6').

7. Support de montage selon l'une des revendications 1 à 6, caractérisé en ce que, sur la portion intermédiaire (16), le dos de profilé (6) est un dos plat.

8. Support de montage selon l'une des revendications 1 à 7, caractérisé en ce que les trous (12) pour les boulons (11) assurant la liaison avec le flasque de roue (2) sont disposés à l'extérieur des zones terminales (15) déformées sur les ailes de profilé (7).

9. Support de montage selon la revendication 8, caractérisé en ce qu'il comporte dans la portion intermédiaire (16), sur les ailes de profilé (7), deux paires de trous (12) pour deux boulons (11).

10. Support de montage selon la revendication 8 ou 9, caractérisé en ce que les axes des trous (12) pour les boulons se trouvent sensiblement au niveau du centre de courbure (M) des zones terminales déformées (15).

11. Support de montage selon l'une des revendications 1 à 10, caractérisé en ce que dans la portion intermédiaire (16) les deux ailes de profilé (7) sont inclinées par rapport au dos de profilé (6) selon un angle différent de l'angle droit d'une valeur comprise entre 0,1° et 0,5°, en sorte qu'elles convergent l'une vers l'autre en direction du dos de profilé (6).

12. Support de montage selon l'une des revendications de 1 à 11, caractérisé en ce que les ailes de profilé (7, 7') sont munies de bords (8) orientés vers l'extérieur.

13. Support de montage selon l'une des revendications 1 à 12, caractérisé en ce qu'il est constitué par une pièce monobloc en tôle emboutie à la presse.

14. Jante de réglage de voie comportant des supports de montage selon l'un ou plusieurs des revendications 1 à 13, fixés sur son fond de jante, de préférence par des cordons de soudure périphérique, caractérisé en ce que les supports de montage (3) s'appuient par leurs ailes de profilé (7, 7') en direction de l'axe de roue, contre une partie déformée (4) du fond de jante, de préférence contre les flancs (5') d'une base creuse (4).

FIG.1

FIG.5

FIG.2

EP 0 348 613 B1

FIG.3

FIG.4

10